# FASCICULE DE BREVET EUROPEEN

(11) **EP 0 593 362 B1**
(45) Date de publication et mention de la délivrance du brevet: **10.04.1996**
(21) Numéro de dépôt: 93402527.1
(22) Date de dépôt: 14.10.1993
(51) Int. Cl.: H02G 3/28

(54) **Ensemble profilé pour le câblage d'appareillages électriques dans une paroi, et ossature et goulotte propres à la constitution d'un tel ensemble profilé**
Profileinrichtung für die Verkabelung elektrischer Apparate, und geeignetes Skelett und Rinne um eine solche Einrichtung zu bauen
Profile device for cabling of electrical apparatuses in a wall, appropriate frame and channel for assembling such a device

(30) Priorité: 16.10.1992 FR 9212405
(43) Date de publication de la demande: 20.04.1994
(73) Titulaire: LEGRAND, F-87045 Limoges Cédex (FR)
(72) Inventeur: Buard, Yvon, F-53600 Voutre (FR)
(74) Mandataire: CABINET BONNET-THIRION

(56) Documents cités:
- EP-A- 0 149 377
- EP-A- 0 382 597
- FR-A- 2 082 032
- FR-A- 2 579 686
- US-A- 4 360 705
- US-A- 4 433 630
- US-A- 4 841 699

## Description

La présente invention concerne d'une manière générale le câblage d'appareillages électriques dans une paroi.

Elle vise plus particulièrement le cas où, la paroi à équiper étant formée de panneaux dûment dressés entre sol et plafond, il est tiré profit des solutions de continuité que constituent les limites de ces panneaux pour disposer ce câblage le long d'un des bords d'un ou plusieurs de ceux-ci, suivant une fraction au moins de leur épaisseur.

Par exemple, le câblage peut ainsi intervenir en plinthe le long du bord horizontal inférieur des panneaux de la paroi, entre ceux-ci et le sol.

En variante, il peut également tout aussi bien intervenir en colonne intégrée le long d'un des bords verticaux de ces panneaux, entre deux de ceux-ci.

Dans tous les cas, ce câblage est ainsi au moins partiellement, sinon totalement, encastré dans la paroi concernée, au bénéfice, notamment, de l'encombrement et de l'esthétique.

La présente invention a tout d'abord pour objet un ensemble profilé propre à un tel câblage encastré.

Cet ensemble profilé est d'une manière générale caractérisé en ce qu'il comporte, en combinaison, d'une part, extérieurement, une ossature qui, réalisée en matériau relativement rigide, tel que métal ou matériau composite par exemple, présente, en creux, au moins un logement ouvert vers l'extérieur, et, d'autre part, intérieurement, au moins une goulotte, qui, réalisée en matériau isolant, est encastrée dans ce logement.

La présente invention a encore pour objet toute ossature et/ou toute goulotte propres à la constitution d'un tel ensemble profilé.

Par sa rigidité, l'ossature extérieure apporte avantageusement toute la résistance mécanique nécessaire, notamment lorsque, l'ensemble profilé étant disposé en plinthe, il a à porter de chant le ou les panneaux qui le surmontent.

Quant à la goulotte interne, elle assure avantageusement toute l'isolation électrique nécessaire.

Préférentiellement, entre l'ossature et la goulotte interviennent des moyens d'encliquetage.

Ainsi le positionnement et le maintien de la goulotte dans l'ossature se trouvent avantageusement assurés, de manière particulièrement fiable et sûre, par simple emboîtement.

Les caractéristiques et avantages de l'invention ressortiront d'ailleurs de la description qui va suivre, à titre d'exemple, en référence aux dessins schématiques annexés sur lesquels :
la figure 1 est une vue en coupe transversale d'un ensemble profilé suivant l'invention ;
les figures 2, 3 sont des vues en coupe transversale qui, analogues à celle de la figure 1, se rapportent chacune respectivement à deux premières variantes de réalisation ;
la figure 4 est une vue en coupe transversale se rapportant à une troisième variante de réalisation ;
la figure 5 est une vue en coupe transversale illustrant une possibilité de mise en oeuvre de cette troisième variante de réalisation.

D'une manière générale, et tel qu'illustré sur ces figures, l'ensemble profilé 10 suivant l'invention est destiné à être disposé le long d'un des bords 11 d'un quelconque panneau 12 appartenant à une quelconque paroi, suivant une fraction au moins de l'épaisseur de ce panneau 12.

Dans les formes de mise en oeuvre représentées, il intervient longitudinalement en plinthe le long du bord 11 horizontal inférieur d'un tel panneau 12, entre celui-ci et le sol 13, et, transversalement, il s'étend sur la totalité de l'épaisseur de ce panneau 12, en débouchant sur l'une et l'autre des faces de celui-ci.

Dans ces formes de réalisation, l'ensemble profilé 10 suivant l'invention constitue en pratique un support pour le ou les panneaux 12 qui le surmontent, ceux-ci portant par son intermédiaire sur le sol 13.

Mais il va de soi que, en variante, l'ensemble profilé 10 suivant l'invention peut tout aussi bien s'étendre le long du bord 11 horizontal supérieur d'un panneau 12, ou, en colonne intégrée, le long d'un des bords verticaux de deux panneaux 12, entre ceux-ci.

La constitution du ou des panneaux 12 susceptibles d'être concernés étant bien connue par elle-même, et ne relevant pas en soi de la présente invention, elle ne sera pas décrite ici.

Il suffira d'indiquer que ce panneau 12 peut indifféremment constituer par avance un ensemble unitaire ou être constitué de divers éléments à assembler lors de sa mise en place.

Globalement, l'ensemble profilé 10 suivant l'invention comporte, en combinaison, d'une part, extérieurement, une ossature 14, qui, réalisée en matériau relativement rigide, tel qu'un métal, un alliage métallique ou un matériau composite, présente, en creux, au moins un logement 15 ouvert vers l'extérieur, sur l'une et/ou l'autre des faces du panneau 12, et, d'autre part, intérieurement, au moins une goulotte 16, qui, réalisée en matériau isolant, et par exemple en matière synthétique, est encastrée dans ce logement 15.

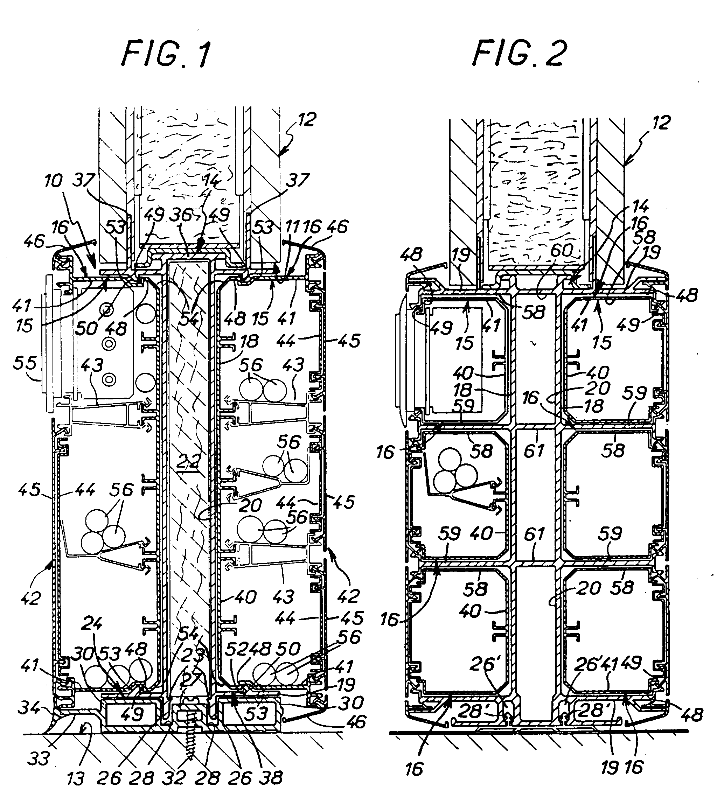

Dans la forme de réalisation plus particulièrement représentée sur la figure 1, l'ossature 14 présente dos à dos deux logements 15, à raison d'un par face du panneau 12, et chacun d'eux s'étend de manière unitaire et continue sur toute sa largeur.

Conjointement, il n'est prévu, pour chacun de ces logements 15, qu'une goulotte 16, de forme complémentaire.

Globalement, chacun des logements 15 est défini par une paroi de fond 18, qui s'étend suivant le plan du panneau 12, et par deux parois latérales 19, qui s'étendent perpendiculairement à celui-ci.

Dans la forme de réalisation plus particulièrement représentée sur la figure 1, l'ossature 14 comporte d'un seul tenant ses deux logements 15, et elle présente entre eux un évidement central 20, qui, défini entre les parois de fond 18 de ces logements 15, est ouvert vers l'extérieur suivant l'une de ses tranches.

En pratique, dans cette forme de réalisation, cet évidement central 20 est ouvert vers l'extérieur le long de sa tranche inférieure, c'est-à-dire du côté du sol 13.

Quoi qu'il en soit, et tel que représenté, cet évidement central 20 peut avantageusement être mis à profit pour le logement d'une quelconque âme 22 permettant avantageusement de rétablir en son sein l'une au moins des fonctions, telle que fonction d'isolation phonique ou de pare-feu, du panneau 12.

Ainsi qu'il est aisé de le comprendre, l'ouverture de l'évidement central 20 suivant l'une de ses tranches facilite avantageusement la mise en place de cette âme 22, cette mise en place pouvant se faire par simple engagement latéral de celle-ci.

Pour la retenue de l'âme 22, il est prévu, intérieurement, dans l'évidement central 20, en bordure de son ouverture, des crans 23.

Dans la forme de réalisation représentée sur la figure 1, il est associé à l'ossature 14, du côté du sol 13, pour le positionnement et le maintien de cette ossature 14, une longrine 24, qui, en l'espèce, l'ensemble profilé 10 suivant l'invention intervenant en plinthe, constitue une semelle.

L'ossature 14 présente, sur sa tranche correspondant à cette longrine 24, des moyens d'engagement par lesquels elle est apte à venir en prise avec des moyens d'engagement complémentaires prévus à cet effet sur celle-ci.

Dans la forme de réalisation représentée sur la figure 1, ces moyens d'engagement comportent, sur l'ossature 14, deux languettes 26, qui, en pratique, prolongent chacune respectivement les parois de fond 18 de ses logements 15 au-delà des parois latérales 19 correspondantes de ceux-ci, et à la racine desquelles sont formés les crans 23, et, sur la longrine 24, deux rainures 28, qui sont chacune respectivement formées entre un bossage médian 29 et deux bossages latéraux 30, et dans lesquelles viennent chacune respectivement s'insérer les languettes 26 de l'ossature 14.

En pratique, pour faciliter cette insertion, la tranche d'attaque des languettes 26 de l'ossature 14 est biseautée par un chanfrein le long de l'une au moins de ses arêtes.

En pratique, également, au terme de cette insertion l'ossature 14 se trouve en appui sur la surface supérieure des bossages latéraux 30 de la longrine 24 par les parois latérales 19 correspondantes de ses logements 15.

Dans la forme de réalisation représentée, le bossage médian 29 et les bossages latéraux 30 de la longrine 24 sont des bossages en caisson.

Le bossage médian 29 est mis à profit pour la fixation de la longrine 24 au sol 13, et, par exemple, et tel que représenté, cette fixation peut se faire à l'aide de vis 32.

Tel que représenté sur la partie de gauche de la figure 1, la longrine 24 peut par ailleurs comporter, en saillie sur l'un et/ou l'autre de ses bossages latéraux 30, à mi-hauteur de ceux-ci, une languette 33, qui s'étend parallèlement au sol 13, et qui sert de support à un joint d'étanchéité 34 assurant la liaison entre celui-ci et la goulotte 16 correspondante.

Cette languette 33, qui est préférentiellement sécable à cet effet à sa racine, a été supprimée, à titre d'exemple sur la partie de droite de la figure 1.

Comme l'ossature 14, la longrine 24 est préférentiellement en matériau relativement rigide, tel que métal, alliage métallique ou matériau composite.

Du côté opposé au sol 13, l'évidement central 20 de l'ossature 14 est fermé par une paroi transversale 36 qui, dans la forme de réalisation représentée sur la figure 1, s'étend de part et d'autre des parois de fond 18 des logements 15.

En outre, dans cette forme de réalisation, les parois latérales 19 correspondantes de ces logements 15 sont légèrement en retrait par rapport à cette paroi transversale 36.

De ce même côté, c'est-à-dire du côté opposé au sol 13, l'ossature 14 présente en saillie sur sa tranche correspondante, pour liaison au panneau 12 qui la surmonte, au moins une languette 37.

Dans la forme de réalisation représentée, deux languettes 37 sont prévues, à distance l'une de l'autre, parallèlement aux parois de fond 18 des logements 15.

En pratique, ces languettes 37 s'étendent en saillie sur les parois latérales 19 correspondantes de ces logements 15, dans la zone médiane de celles-ci.

Elles sont donc en retrait par rapport aux bords correspondants de l'ossature 14.

Mais, en variante, ces languettes 37 peuvent tout aussi bien être implantées dans une zone différente de la tranche de l'ossature 14, et, par exemple, être en saillie sur la paroi transversale 36 appartenant à celle-ci.

Dans la forme de réalisation représentée à la figure 1, les goulottes 16 mises en oeuvre comportent, globalement, un corps 38, à paroi de fond 40 et parois latérales 41, et des moyens de fermeture 42, qui, de manière connue en soi, et tel que décrit par exemple dans le brevet français déposé sous le No 89 01534 le 7 Février 1989 et publié sous le No 2 642 911, sont constitués soit d'un couvercle unique, qui va de l'une à l'autre des parois latérales 41 du corps 38, soit d'un ou plusieurs couvercles de moindre largeur, qui, en substitution au couvercle unique précédent, vont d'une paroi latérale 41 du corps 38 à une cloison intermédiaire 43 rapportée de manière amovible sur la paroi de fond 40 de ce corps 38, soit de l'une à l'autre de deux telles cloisons intermédiaires 43.

Les dispositions correspondantes ne relevant pas de la présente invention, elles ne seront pas décrites plus en détail ici.

Dans la forme de réalisation représentée sur la figure 1, le ou les couvercles constituant les moyens de fermeture 42 ont, de manière connue en soi, et tel que décrit dans le brevet français déposé sous le No 83 19563 le 7 Décembre 1983 et publié sous le No 2 556 517, une structure composite.

Ils sont en effet chacun formés d'un élément de support 44, interne, réalisé en matière synthétique, et d'un élément de revêtement 45, externe, réalisé en métal.

Les dispositions correspondantes ne relevant pas non plus de la présente invention, elles ne seront pas non plus décrites plus en détail ici.

De manière connue en soi, ce ou ces couvercles sont dûment rapportés par encliquetage sur les parois latérales 41 du corps 38 et/ou sur les cloisons intermédiaires 43 compartimentant éventuellement intérieurement celui-ci.

De manière connue en soi, enfin, et tel que représenté, il peut être associé aux goulottes 16, le long de l'un au moins de leurs bords, des éléments de jonction 46, qui, rapportés par encliquetage sur les parois latérales 41 de leur corps 38, sont destinés à établir une liaison entre elles et le panneau 12 et/ou la longrine 24.

Préférentiellement, entre l'ossature 14 et une goulotte 16, et, plus précisément, entre cette ossature 14 et le corps 38 d'une telle goulotte 16, interviennent des moyens d'encliquetage.

En pratique, ces moyens d'encliquetage comportent des crans 48, 49 établis de manière complémentaire sur les parois latérales 19 des logements 15 de l'ossature 14 et sur les parois latérales 41 du corps 38 des goulottes 16.

Dans la forme de réalisation représentée sur la figure 1, ces crans 48, 49 interviennent en pleine surface des parois latérales 19, 41 concernées et il n'est prévu pour chacune d'elles qu'un tel cran 48, 49.

Pour les parois latérales 19 des logements 15 de l'ossature 14, le cran 48 est formé sur une nervure 50 présente en saillie à cet effet sur une telle paroi latérale 19.

Pour les parois latérales 41 du corps 38 d'une goulotte 16, le cran 49 est formé par l'un des flancs d'une rainure 52 également présente en creux à cet effet sur une telle paroi latérale 41.

Préférentiellement, pour faciliter l'insertion du corps 38 d'une goulotte 16 dans un logement 15 de l'ossature 14, l'un au moins des crans 48, 49 formant les moyens d'encliquetage correspondants est précédé par un chanfrein d'engagement.

Dans la forme de réalisation représentée sur la figure 1, il en est ainsi tant pour les crans 48 de l'ossature 14, la tranche opposée des nervures 50 formant ces crans 48 étant abattue par un chanfrein d'engagement 53, que pour l'un au moins des crans 49 d'une goulotte 16, l'une au moins des parois latérales 41 du corps 38 d'une telle goulotte 16, et, en pratique, chacune de celles-ci, se raccordant à sa paroi de fond 40 par un chanfrein d'engagement 54.

Au montage, il peut être procédé comme suit.

La longrine 24 est d'abord rapportée sur le sol 13.

L'ossature 14 est ensuite rapportée, avec l'âme 22, sur cette longrine 24, par simple emboîtement de ses languettes 26 dans les rainures 28 de celle-ci.

Il est procédé ensuite à la mise en place du ou des panneaux 12, puis à celle des goulottes 16, par simple encliquetage de leurs corps 38 dans les logements 15 de l'ossature 14.

Les goulottes 16 se trouvent ainsi encastrées dans l'ossature 14, et, par celle-ci, dans la paroi à la constitution de laquelle cette ossature 14 participe au même titre que le ou les panneaux 12 qui la surmontent.

Suivant une variante de réalisation non représentée, l'une au moins des parois latérales 19, 41 concernées par les crans 48, 49 formant les moyens d'encliquetage intervenant entre une goulotte 16 et l'ossature 14 présente en saillie plusieurs de tels crans 48, 49, à la manière d'une crémaillère.

Il est ainsi avantageusement possible d'ajuster à la valeur désirée la profondeur de pénétration d'une telle goulotte 16 dans le logement 15 correspondant de l'ossature 14, et, donc, la profondeur, ou épaisseur, dont cette goulotte 16 fait éventuellement saillie sur cette ossature 14.

Quoi qu'il en soit, et tel qu'illustré en traits interrompus sur la figure 1, les goulottes 16 ainsi mises en oeuvre servent au câblage d'appareillages électriques 55, c'est-à-dire tant au logement, et à la protection, de tels appareillages électriques 55, qu'au logement, et à la protection, des conducteurs électriques 56 nécessaires à leur desserte.

Dans la variante de réalisation représentée sur la figure 2, l'un au moins des logements 15 de l'ossature 14, et en pratique chacun de ceux-ci, est subdivisé en compartiments 58 par des cloisons 59 venues d'un seul tenant de la paroi de fond 18, et il est prévu au moins une goulotte 16 par compartiment 58.

En pratique, dans la forme de réalisation représentée, il est ainsi prévu trois compartiments 58, de même largeur, dans chacun des logements 15, et il n'est encastré qu'une seule goulotte 16 dans chacun de ces compartiments 58.

En outre, dans cette variante de réalisation, l'évidement central 20 de l'ossature 14 est lui-même subdivisé en caissons 60 par des cloisons 61 venues d'un seul tenant des parois de fond 18, et cet évidement central 20 est fermé sur l'une et l'autre de ses tranches longitudinales.

Les cloisons 61 sont en pratique dans le prolongement des cloisons 59.

Par ailleurs, dans cette variante de réalisation, les crans 48 de l'ossature 14 et ceux 49 d'une goulotte 16 interviennent en bout des parois latérales 19, 41 de celles-ci, en étant en pratique formés par des retours en équerre que présentent ces parois latérales 19, 41 du côté opposé aux parois de fond 18, 40 correspondantes.

Enfin, dans cette variante de réalisation, la longrine 24 n'a par elle-même qu'une épaisseur réduite, et les moyens d'engagement intervenant entre l'ossature 14 et elle comportent, en saillie sur elle, des pions d'ancrage 28', du type à barbillons par exemple, tel que représenté, et, en creux sur la tranche correspondante de l'ossature 14, des rainures 26' par lesquelles cette ossature 14 peut être engagée sur ces pions d'ancrage 28'.

Pour le reste, les dispositions sont du même type que les précédentes.

Du fait que, dans ce qui précède, l'ossature 14 comporte d'un seul tenant les deux logements 15 qu'elle présente, son épaisseur, c'est-à-dire sa dimension hors tout perpendiculairement aux parois de fond 18 de ces logements 15, n'est globalement bien adaptée par elle-même qu'à une épaisseur donnée pour le panneau 12.

Pour son adaptation à des épaisseurs différentes du panneau 12, il peut lui être associé, en épaisseur, au moins une pièce d'adaptation.

Dans les formes de réalisation d'un seul tenant représentées sur les figures 1 et 2, les éléments de jonctions 46 constituent par eux-mêmes de telles pièces d'adaptation.

Il en est de même pour la ou les crémaillères que comportent éventuellement pour la formation de crans 48, 49 les parois latérales 19, 41 de l'ossature 14 et des goulottes 16.

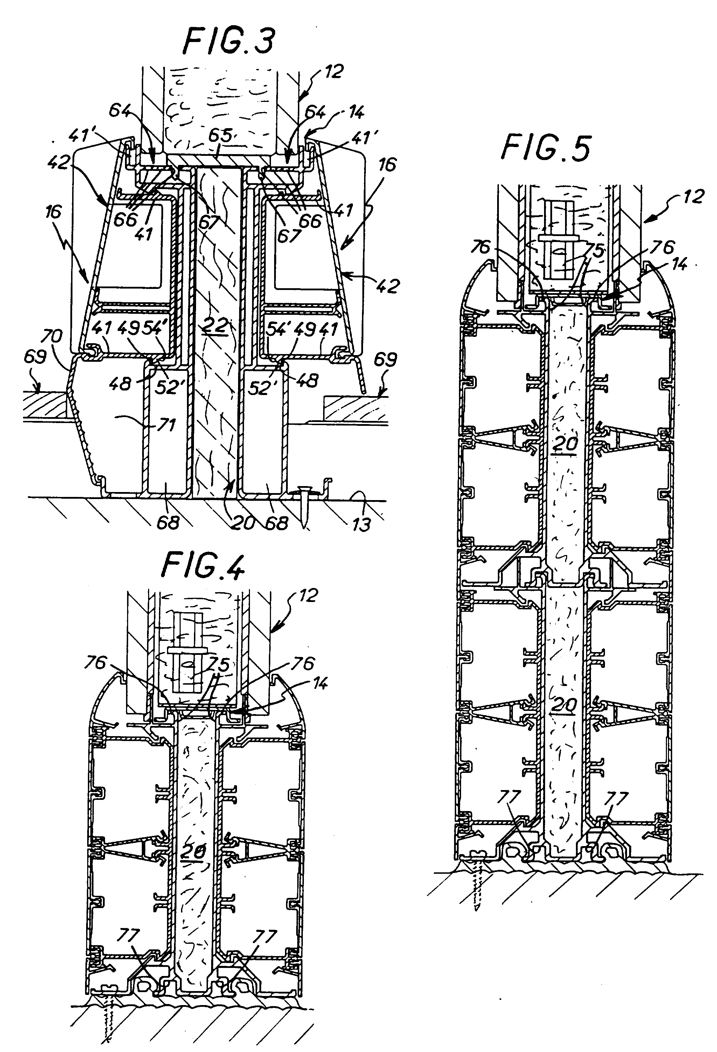

Dans la variante de réalisation représentée sur la figure 3, l'ossature 14 est formée de deux demi-ossatures 64 auxquelles appartiennent chacun respectivement ses deux logements 15, ce qui permet de pouvoir l'adapter directement par elle-même à n'importe quelle épaisseur pour le panneau 12.

Préférentiellement, et tel que représenté, ces deux demi-ossatures 64 sont alors reliées l'une à l'autre par au moins une entretoise 65.

Il peut s'agir aussi bien d'une entretoise unique qui court longitudinalement sur toute la longueur de l'ossature 14, que d'entretoises multiples intervenant ponctuellement de place en place le long de celle-ci.

Dans la forme de réalisation représentée, les deux demi-ossatures 64 sont réglables en écartement grâce à l'entretoise 65 qui les relie, ce qui permet si désiré une adaptation en épaisseur au panneau 12.

Par exemple, et tel que représenté, les deux demi-ossatures 64 présentent chacune à cet effet, transversalement, sur leur tranche correspondante, une pluralité de perçages 66 avec l'un ou l'autre desquels peut venir en prise par un goujon 67 l'entretoise 65.

Comme précédemment, il est mis en oeuvre une âme 22 dans l'évidement central 20 que forment entre elles les deux demi-ossatures 64.

Cette âme 22 intervient simplement librement entre ces deux demi-ossatures 64.

Dans la forme de réalisation représentée, chacune des demi-ossatures 64 présente à sa base un volume en caisson 68 pour l'adaptation de l'ensemble à l'épaisseur d'un éventuel revêtement 69 appliqué au sol 13.

Par ailleurs, dans cette forme de réalisation, les crans 49 d'une goulotte 16 sont formés sur des nervures 52' prévues en saillie sur ses parois latérales 41, et l'arête opposée de ces nervures 52' est abattue par un chanfrein d'engagement 54'.

Comme dans la forme de réalisation de la figure 1, ces crans 49 interviennent en pleine surface pour les parois latérales 41.

Par ailleurs, également, dans la forme de réalisation représentée, le couvercle constituant les moyens de fermeture 42 d'une goulotte 16 s'étend entre, d'une part, la paroi latérale 41 de cette goulotte 16 la plus proche du sol 13, et, d'autre part, une rainure 41' prévue à cet effet sur l'ossature 14 du côté opposé au sol 13.

Enfin, dans la forme de réalisation représentée, la paroi latérale 41 d'une goulotte 16 du côté du sol 13 se prolonge d'un seul tenant par une bavette sécable 70 pour liaison de l'ensemble si désiré au revêtement 69 présent sur le sol 13, comme cela est le cas sur la partie de droite de la figure 3.

Lorsqu'elle est conservée dans sa totalité, comme cela est le cas sur la partie de gauche de la figure 3, cette bavette sécable 70 se referme sur l'ossature 14, en formant avec celle-ci et avec la paroi latérale 41 correspondante de la goulotte 16, un compartiment 71.

Dans ce qui précède, l'ossature 14 s'étend d'un seul tenant entre le sol 13 et le panneau 12 qui la surmonte, et sa dimension correspondante, ou largeur, est bien déterminée.

Si désiré, il peut lui être associé en largeur au moins une pièce d'adaptation lui permettant de se satisfaire de largeurs différentes entre le sol 13 et le panneau 12.

En variante, figures 4, 5, cette adaptation en largeur peut se faire de manière modulaire.

Dans ce cas, l'ossature 14 présente sur ses tranches des moyens d'emboîtement complémentaires.

Par exemple, et tel que représenté, elle présente, sur l'une de ces tranches, deux languettes 75 munies chacune d'un retour 76 en directions opposées l'une par rapport à l'autre, et, sur l'autre de ces tranches, deux rainures 77 dans lesquelles peuvent s'engager de telles languettes 75.

En pratique, l'évidement central 20 est alors ouvert du côté des languettes 75.

L'ossature 14 ainsi constituée peut être mise en oeuvre isolément, figure 4, à la manière de ce qui a été décrit précédemment.

Elle peut également être mise en oeuvre en superposition avec une ou plusieurs autres.

A la figure 5, deux ossatures 14 sont ainsi superposées.

Elles forment alors en quelque sorte conjointement une ossature complexe fractionnée en largeur en ossatures élémentaires modulaires.

Pour le reste, les dispositions sont globalement du même type que celles décrites précédemment.

La présente invention ne se limite bien entendu pas aux formes de réalisation décrites et, éventuellement, représentées, mais englobe toute variante d'exécution et/ou de combinaison de leurs divers éléments dans les limites définies par les revendications.

En particulier, au lieu d'intervenir entre les parois latérales de l'ossature et celles des goulottes, les moyens d'encliquetage prévus entre une telle ossature et une telle goulotte peuvent aussi bien intervenir entre leurs parois de fond.

## Revendications

1. Ensemble profilé à disposer le long d'un des bords d'un panneau, suivant une fraction au moins de l'épaisseur de celui-ci, caractérisé en ce qu'il comporte, en combinaison, d'une part, extérieurement, une ossature (14), qui, réalisée en matériau relativement rigide, présente en creux, au moins un logement (15) ouvert vers l'extérieur, et, d'autre part, intérieurement, au moins une goulotte (16) qui, réalisée en matériau isolant, est encastrée dans ledit logement (15).

2. Ensemble profilé suivant la revendication 1, caractérisé en ce que, entre l'ossature (14) et la goulotte (16), interviennent des moyens d'encliquetage.

3. Ensemble profilé suivant la revendication 2, caractérisé en ce que lesdits moyens d'encliquetage comportent des crans (48, 49) établis de manière complémentaire sur les parois latérales (19) du logement (15) de l'ossature (14) et sur les parois latérales (41) du corps (38) de la goulotte (16).

4. Ensemble profilé suivant la revendication 3, caractérisé en ce que l'une au moins des parois latérales (19, 41) concernées présente en série plusieurs crans (48, 49), à la manière d'une crémaillère.

5. Ensemble profilé suivant l'une quelconque des revendications 3, 4, caractérisé en ce que l'un au moins desdits crans (48, 49) est précédé par un chanfrein d'engagement (53, 54).

6. Ensemble profilé suivant la revendication 2, caractérisé en ce que lesdits moyens d'encliquetage interviennent entre les parois de fond (18, 40) de l'ossature (14) et de la goulotte (16).

7. Ensemble profilé suivant la revendication 1, caractérisé en ce que l'une au moins des parois latérales (41) du corps (38) de la goulotte (16) se raccorde à la paroi de fond (40) de ce corps (38) par un chanfrein d'engagement (54).

8. Ensemble profilé suivant l'une quelconque des revendications 1 à 7, caractérisé en ce que l'ossature (14) présente dos à dos deux logements (15).

9. Ensemble profilé suivant la revendication 8, caractérisé en ce que, entre lesdits logements (15), l'ossature (14) comporte un évidement central (20).

10. Ensemble profilé suivant la revendication 9, caractérisé en ce que ledit évidement central (20) est ouvert vers l'extérieur suivant l'une de ses tranches.

11. Ensemble profilé suivant l'une quelconque des revendications 8 à 10, caractérisé en ce que l'ossature (14) comporte d'un seul tenant les deux logements (15).

12. Ensemble profilé suivant la revendication 1, caractérisé en ce qu'il est associé en épaisseur à l'ossature (14) au moins une pièce d'adaptation (46).

13. Ensemble profilé suivant l'une quelconque des revendications 8 à 10, caractérisé en ce que l'ossature (14) est formée de deux demi-ossatures (64) auxquelles appartiennent chacun respectivement les deux logements (15).

14. Ensemble profilé suivant la revendication 13, caractérisé en ce que les deux demi-ossatures (64) sont reliées l'une à l'autre par au moins une entretoise (65).

15. Ensemble profilé suivant la revendication 14, caractérisé en ce que les deux demi-ossatures (64) sont réglables en écartement grâce à l'entretoise (65) qui les relie.

16. Ensemble profilé suivant l'une quelconque des revendications 1 à 15, caractérisé en ce que l'ossature (14) présente en saillie sur l'une de ses tranches au moins une languette (37).

17. Ensemble profilé suivant la revendication 16, caractérisé en ce que ladite languette (37) s'étend en retrait par rapport au bord correspondant de l'ossature (14).

18. Ensemble profilé suivant l'une quelconque des revendications 1 à 17, caractérisé en ce qu'il est associé à l'ossature (14) une longrine (24), et ladite ossature (14) présente sur l'une de ses tranches des moyens d'engagement (26, 26') par lesquels elle est apte à venir en prise avec des moyens d'engagement (28, 28') complémentaires prévus à cet effet sur ladite longrine (24).

19. Ensemble profilé suivant l'une quelconque des revendications 1 à 18, caractérisé en ce que l'un au moins des logements (15) de l'ossature (14) est subdivisé en compartiments (58) par au moins une cloison (59), et il est prévu au moins une goulotte (16) par compartiment (58).

20. Ensemble profilé suivant l'une quelconque des revendications 1 à 19, caractérisé en ce qu'il est associé en largeur à l'ossature (14) au moins une pièce d'adaptation.

21. Ensemble profilé suivant l'une quelconque des revendications 1 à 20, caractérisé en ce que l'ossature (14) présente sur ses tranches des moyens d'emboîtement (75, 77) complémentaires.

22. Ossature propre à la constitution d'un ensemble profilé suivant l'une quelconque des revendications 1 à 21.

23. Goulotte propre à la constitution d'un ensemble profilé suivant l'une quelconque des revendications 1 à 21.

## Patentansprüche

1. Profileinheit zum Anordnen entlang einer der Kanten einer Platte über wenigstens einen Bruchteil der Dicke dieser Platte, dadurch gekennzeichnet, daß sie in Kombination miteinander einerseits ein außenliegendes Gerüst (14) umfaßt, das aus relativ steifem Material hergestellt ist und wenigstens eine nach außen hin offene Aufnahme (15) in Form einer Vertiefung aufweist, und andererseits wenigstens eine innenliegende Rinne (16) umfaßt, die aus Isoliermaterial hergestellt und in die Aufnahme (15) eingesetzt ist.

2. Profileinheit nach Anspruch 1, dadurch gekennzeichnet, daß zwischen dem Gerüst (14) und der Rinne (16) Rastmittel vorgesehen sind.

3. Profileinheit nach Anspruch 2, dadurch gekennzeichnet, daß die Rastmittel Rastelemente (48, 49) umfassen, die in komplementärer Weise an den Seitenwänden (19) der Aufnahme (15) des Gerüstes (14) und an den Seitenwänden (41) des Körpers (38) der Rinne (16) vorgesehenen sind.

4. Profileinheit nach Anspruch 3, dadurch gekennzeichnet, daß wenigstens eine der betreffenden Seitenwände (19, 41) nach Art einer Zahnstange mehrere in einer Reihe liegende Rastelemente (48, 49) aufweist.

5. Profileinheit nach Anspruch 3 oder 4, dadurch gekennzeichnet, daß wenigstens einem der Rastelemente (48, 49) eine schrägverlaufende Eingriffskante (53, 54) vorausgeht.

6. Profileinheit nach Anspruch 2, dadurch gekennzeichnet, daß die Rastmittel zwischen der Bodenwand (18, 40) des Gerüstes (14) und der Rinne (16) vorgesehen sind.

7. Profileinheit nach Anspruch 1, dadurch gekennzeichnet, daß wenigstens eine der Seitenwände (41) des Körpers (38) der Rinne (16) über eine schrägverlaufende Eingriffskante (54) mit der Bodenwand (40) dieses Körpers (38) verbunden ist.

8. Profileinheit nach einem der Ansprüche 1 bis 7, dadurch gekennzeichnet, daß das Gerüst (14) zwei Aufnahmen (15) mit einander zugewandten Rückseiten aufweist.

9. Profileinheit nach Anspruch 8, dadurch gekennzeichnet, daß das Gerüst (14) zwischen den Aufnahmen (15) eine zentrale Aussparung (20) aufweist.

10. Profileinheit nach Anspruch 9, dadurch gekennzeichnet, daß die zentrale Aussparung (20) entlang eines ihrer Randabschnitte nach außen offen ist.

11. Profileinheit nach einem der Ansprüche 8 bis 10, dadurch gekennzeichnet, daß das Gerüst (14) die beiden Aufnahmen (15) in einstückiger Ausführung umfaßt.

12. Profileinheit nach Anspruch 1, dadurch gekennzeichnet, daß dem Gerüst (14) in Dickenrichtung wenigstens ein Anpassungsteil (46) zugeordnet ist.

13. Profileinheit nach einem der Ansprüche 8 bis 10, dadurch gekennzeichnet, daß das Gerüst (14) aus zwei Halbgerüsten (64) gebildet ist, zu denen die beiden Aufnahmen (15) gehören.

14. Profileinheit nach Anspruch 13, dadurch gekennzeichnet, daß die beiden Halbgerüste (64) über wenigstens ein Abstandsstück (65) miteinander verbunden sind.

15. Profileinheit nach Anspruch 14, dadurch gekennzeichnet, daß der Abstand zwischen den beiden Halbgerüsten (64) durch das diese verbindende Zwischenstück (65) einstellbar ist.

16. Profileinheit nach einem der Ansprüche 1 bis 15, dadurch gekennzeichnet, daß das Gerüst (14) wenigstens eine an einem seiner Ränder vorstehende Zunge (37) aufweist.

17. Profileinheit nach Anspruch 16, dadurch gekennzeichnet, daß die Zunge (37) bezüglich der entsprechenden Kante des Gerüstes (14) zurückgesetzt ist.

18. Profileinheit nach einem der Ansprüche 1 bis 17, dadurch gekennzeichnet, daß dem Gerüst (14) ein Längsträger (24) zugeordnet ist und daß das Gerüst (14) an einem seiner Ränder Eingriffsmittel (26, 26') aufweist, über die es mit am Längsträger (24) vorgesehenen komplementären Eingriffsmitteln (28, 28') in Eingriff treten kann.

19. Profileinheit nach einem der Ansprüche 1 bis 18, dadurch gekennzeichnet, daß wenigstens eine der Aufnahmen (15) des Gerüstes (14) durch wenigstens eine Zwischenwand (59) in Abteilungen (58) unterteilt ist und daß je Abteilung (58) wenigstens eine Rinne (16) vorgesehen ist.

20. Profileinheit nach einem der Ansprüche 1 bis 19, dadurch gekennzeichnet, daß dem Gerüst (14) in Breitenrichtung wenigstens ein Anpassungsteil zugeordnet ist.

21. Profileinheit nach einem der Ansprüche 1 bis 20, dadurch gekennzeichnet, daß das Gerüst (14) an seinen Rändern komplementäre Steckmittel (75, 77) aufweist.

22. Gerüst zur Bildung einer Profileinheit gemäß einem der Ansprüche 1 bis 21.

23. Rinne zur Bildung einer Profileinheit gemäß einem der Ansprüche 1 bis 21.

## Claims

1. A profiled assembly to be disposed along one of the edges of a panel over a fraction at least of the thickness thereof, characterised in that it comprises in combination on the one hand externally a frame structure (14) which, made of relatively rigid material, has in recessed relationship at least one housing (15) which is open towards the exterior and on the other hand internally at least one channel (16) which, made of insulating material, is inserted into said housing (15).

2. A profiled assembly according to claim 1 characterised in that latching means are operative between the frame structure (14) and the channel (16).

3. A profiled assembly according to claim 2 characterised in that said latching means comprise catches (48, 49) disposed in a complementary manner on the side walls (19) of the housing (15) of the frame structure (14) and on the side walls (41) of the body (38) of the channel (16).

4. A profiled assembly according to claim 3 characterised in that one at least of the side walls (19, 41) in question has in series a plurality of catches (48, 49) in the manner of a toothed rack.

5. A profiled assembly according to either one of claims 3 and 4 characterised in that one at least of said catches (48, 49) is preceded by an engagement chamfer (53, 54).

6. A profiled assembly according to claim 2 characterised in that said latching means are operative between the bottom walls (18, 40) of the frame structure (14) and the channel (16).

7. A profiled assembly according to claim 1 characterised in that one at least of the side walls (41) of the body (38) of the channel (16) is connected to the bottom wall (40) of said body (38) by an engagement chamfer (54).

8. A profiled assembly according to any one of clams 1 to 7 characterised in that the frame structure (14) has two housings (15) back-to-back.

9. A profiled assembly according to claim 8 characterised in that between said housings (15) the frame structure (14) comprises a central opening (20).

10. A profiled assembly according to claim 9 characterised in that said central opening (20) is open towards the exterior along one of its edges.

11. A profiled assembly according to any one of claims 8 to 10 characterised in that the frame structure (14) comprises the two housings (15) in one piece.

12. A profiled assembly according to claim 1 characterised in that at least one adaptation portion (46) is associated with the frame structure (14) in respect of thickness.

13. A profiled assembly according to any one of claims 8 to 10 characterised in that the frame structure (14) is formed by two half-frame structures (64) to which the two housings (15) each respectively belong.

14. A profiled assembly according to claim 13 characterised in that the two half-frame structures (64) are connected together by at least one cross-piece (65).

15. A profiled assembly according to claim 14 characterised in that the two half-frame structures (64) are adjustable in respect of their spacing from each other by virtue of the cross-piece (65) which connects them.

16. A profiled assembly according to any one of claims 1 to 15 characterised in that the frame structure (14) has at least one tongue portion (37) in projecting relationship on one of its edges.

17. A profiled assembly according to claim 16 characterised in that said tongue portion (37) extends in set-back relationship with respect to the corresponding edge of the frame structure (14).

18. A profiled assembly according to any one of claims 1 to 17 characterised in that a longitudinal member (24) is associated with the frame structure (14) and said frame structure (14) has on one of its edges engagement means (26, 26'), by way of which it is capable of coming into engagement with complementary engagement means (28, 28') provided for that purpose on said longitudinal member (24).

19. A profiled assembly according to any one of claims 1 to 18 characterised in that one at least of the housings (15) of the frame structure (14) is subdivided into compartments (58) by at least one partition (59) and there is provided at least one channel (16) per compartment (58).

20. A profiled assembly according to any one of claims 1 to 19 characterised in that at least one adaptation portion is associated with the frame structure (14) in respect of width.

21. A profiled assembly according to any one of claims 1 to 20 characterised in that the frame structure (14) has complementary interengagement means (75, 77) on its edges.

22. A frame structure for constituting a profiled assembly according to any one of claims 1 to 21.

23. A channel for constituting a profiled assembly according to any one of claims 1 to 21.
